# EUROPÄISCHE PATENTSCHRIFT

(11) **EP 1 916 355 B1**
(45) Veröffentlichungstag und Bekanntmachung des Hinweises auf die Patenterteilung: **19.10.2011**
(21) Anmeldenummer: 07015415.8
(22) Anmeldetag: 07.08.2007
(51) Int. Cl.: E04F 13/04, E04F 13/06, B29C 65/42, B29C 65/00

(54) **Gittergewebestreifen mit einer daran befestigten Profilleiste**
Mesh fabric strip with a profile attached thereon
Bande de tissu à mailles avec profilé fixé dessus

(30) Priorität: 17.10.2006 DE 202006015852 U
(43) Veröffentlichungstag der Anmeldung: 30.04.2008
(73) Patentinhaber: VWS-Befestigungstechnik GmbH, 72805 Lichtenstein (DE)
(72) Erfinder: DOLLINGER, Wolfram, 72805 Lichtenstein (DE); HOFF, Dominique, 57660 Grostenquin (FR)
(74) Vertreter: Kohler Schmid Möbus

(56) Entgegenhaltungen:
- EP-A- 0 875 641
- EP-A- 0 915 215
- DE-A1- 19 611 468
- DE-A1- 19 647 949
- DE-U1- 20 002 498

## Beschreibung

Die Erfindung betrifft einen Gittergewebestreifen mit einer Profilleiste, insbesondere zum Einbetten in oder unter eine Putzschicht, die eine Putzschicht auf einer Wärmedämmung einer Gebäudewand betreffen kann.

Bekannterweise dienen die Gittergewebestreifen als netzartiges Armierungsmaterial, und an dem Gittergewebestreifen ist bekannterweise eine Profilleiste befestigt. Diese Profilleiste ist in der Regel angeklebt oder angeklemmt, oder der Gittergewebestreifen ist mit der Profilleiste verschweißt bzw. koextrudiert. Ebenfalls sind Ausführungsformen bekannt, bei denen der Gittergewebestreifen mit der Profilleiste verschweißt ist, insbesondere über ein Ultraschweißverfahren mit dieser verbunden wurde (vgl. z.B. EP 0 875 641 A2).

Klebe- und Klemmverbindungen können sich bei größeren Temperaturschwankungen so verändern, dass sich möglicherweise die Profilleiste vom Gittergewebestreifen lösen kann, und koextrudierte bzw. verschweißte Ausführungsformen sind einerseits sehr aufwändig herzustellen, und andererseits müssen bei Schweißverfahren stets Materialien ausgewählt werden, die aufeinander abgestimmt und miteinander verschweißbar sind.

Aus der DE 196 47 949 A1 ist ein Gittergewebestreifen bekannt geworden, der über eine Zwischenlage aus einem Thermoplast an einer Profilleiste mit Durchtrittsöffnungen gehalten ist. Zwischen dem Gittergewebestreifen und der Profilleiste wird die Zwischenlage eingefügt. Anschließend werden die Teile auf eine Auflage aufgelegt und die Zwischenlage wird über einen Pressbügel so erhitzt, dass das Material der Zwischenlage in die Durchtrittsöffnungen der Profilleiste und die Öffnungen des Gewebestreifens einfließt.

Aufgabe der Erfindung ist es, eine Verbindungsart an einem Gittergewebestreifen und einer Profilleiste zur Verfügung zu stellen, die einerseits dauerhaft, unabhängig von Umwelteinflüssen, die beiden Bauteile miteinander verbindet und andererseits vereinfacht die Herstellung eines derartigen Gittergewebestreifens ermöglicht.

Gelöst wird die Aufgabe erfindungsgemäß mit einem Gittergewebestreifen und einer Profilleiste, mit den Merkmalen des Anspruchs 1.

Der erfindungsgemäße Gittergewebestreifen mit einer Profilleiste hat den wesentlichen Vorteil, dass er einfachst und materialunabhängig hergestellt werden kann. Die Verbindung zwischen dem Gittergewebestreifen und der Profilleiste ist kein Materialschluss, sondern ein Form- und Kraftschluss. Das verformbare, formstabil aushärtbare Material wird in vorgegebene Öffnungen am Gittergewebestreifen und der Profilleiste gedrückt, gepresst oder gewalzt, sodass es die Aussparungen am Gittergewebestreifen und an der Profilleiste wenigstens teilweise ausfüllt und abdeckt sowie zusätzlich so überdeckt, übergreift, dass das ausgehärtete formstabile Material den Gittergewebestreifen und die Profilleiste kraftschlüssig zusammenhält.

In weiterer Ausbildung der Erfindung ist der Gittergewebestreifen aus Kunststoff, Glasfaser, Glasseidengewebe oder anderen Materialien hergestellt und die Profilleiste ist ein Kunststoff- und/oder Metallprofil.

Dies hat den Vorteil, dass mit der erfindungsgemäßen Verbindungsform unterschiedlichste Materialien miteinander kombiniert werden können, sodass auch Materialien mit ähnlichen bzw. gleichen Wärmeausdehnungskoeffizienten gewählt werden können, bzw. es können auch Materialien miteinander gepaart werden, die eine materialschlüssige Verbindung bzw. eine Klebverbindung, Krimp- oder koextrudierte Verbindung nicht zulassen.

Vorteilhaft ist es, wenn die Profilleiste als Eckprofil ausgebildet ist und jeder Schenkel des Eckprofils am Gewebestreifen gehalten ist. Dies hat den Vorteil, dass bei der erfindungsgemäßen Verbindungsart auch formschlüssige Verbindungen gewählt werden können, die einen Kraftschluss nur in einer Bewegungsrichtung, d. h. Kraftbelastungsrichtung des Gittergewebestreifens und der Profilleiste, gewährleisten.

In weiterer Ausgestaltung der Erfindung kann die Profilleiste auch als eine Putzabzugskante und/oder als Tropfkante ausgebildet sein. Dies hat den Vorteil, dass neben der dauerhaften Verbindung zwischen Gittergewebestreifen und Profilleiste auch weitere Merkmale an der Profilleiste ausgebildet sein können, die die erfindungsgemäße Verbindungsart nicht beeinflussen und die Verwendung des Gittergewebestreifens mit Profilleiste erweitern.

Bei einer erfindungsgemäßen Ausführungsform des Gittergewebestreifens ist die Profilleiste mit einer Durchtrittsöffnung und einem Gittergewebestreifen beidseits von als Rundschnüren ausgebildetem verformbarem und aushärtbarem Material überlappend durchdrungen. Dies hat den Vorteil, dass die Profilleiste mit dem Gittergewebestreifen einerseits formschlüssig und kraftschlüssig zusammengehalten werden kann, und andererseits können sich die Rundschnüre, unabhängig vom Gittergewebestreifen und der Profilleiste, untereinander materialschlüssig verbinden.

In einer weiteren Ausführungsform der Erfindung können die Rundschnüre bzw. das verformbare und formstabil aushärtbare Material abschnittsweise entlang eines Gittergewebestreifens vorgesehen sein, oder das verformbare und formstabil aushärtbare Material bzw. die Rundschnüre sind durchgängig entlang eines Gittergewebestreifens und entlang einer Profilleiste vorgesehen. Die Rundschnüre bzw. das verformbare und formstabil aushärtbare Material kann, soweit es von beiden Seiten an den Gittergewebestreifen einerseits und an die Profilleiste andererseits angelegt ist, miteinander verschweißt sein.

Das verformbare und aushärtbare Material zur Verbindung eines Gittergewebestreifens mit einer Profilleiste kann ein Thermoplast, Duroplast oder ein Elastomer sein. Wichtig ist dabei, dass beim Zusammenfügen des Gewebestreifens mit der Profilleiste das verformbare Material noch weich ist, sodass es in vorgegebene Aussparungen, Ausformungen, Durchtrittsbohrungen eindringen bzw. Öffnungen durchdringen kann, und nach dem Durchdringen und Umgreifen von Flächenabschnitten an dem Gittergewebestreifen bzw. an der Profilleiste härtet das Material aus und hält den Gittergewebestreifen und die Profilleiste dauerhaft unter einer kraftschlüssigen Verbindung zusammen.

Die erfindungsgemäße Verbindungsart kann besonders herstellungsfreundlich erfolgen. Nach dem Extrudieren, Stanzen, etc. der Profilleiste wird der Gittergewebestreifen positioniert und noch warme, weiche thermoplastische Rundschnüre werden jeweils auf die freien Oberflächen des Gittergewebestreifens und der Profilleiste so gelegt bzw. diesem zugeführt, dass sie miteinander verpresst werden können. Beim Verpressungsvorgang durchdringen die Rundschnüre sowohl den Gittergewebestreifen wie auch die Durchtrittsöffnung an der Profilleiste. Das Material der Rundschnüre füllt nicht nur wenigstens teilweise die Durchtrittsöffnung aus, sondern es umgreift auch die Profilleiste auf der freien Oberfläche und den Gittergewebestreifen ebenfalls auf der freien Oberfläche derart, dass unter einer Zugbelastung eine kraftschlüssige Verbindung geschaffen worden ist. Die erfindungsgemäße Verbindung ist nach dem Aushärten des thermoplastischen Materials irreversibel. Die Profilleiste kann von dem Gewebestreifen nicht mehr getrennt werden.

Der erfindungsgemäße Gittergewebestreifen ist in den nachfolgenden Figuren der Zeichnung beispielhaft beschrieben. Die dort gezeigten Gitterstreifen und auch Profilleisten sind stark schematisiert dargestellt und sind nicht maßstäblich zu verstehen. Die Darstellungsform der Profilleisten wie auch des Gittergewebestreifens wurde so gewählt, dass die erfindungsgemäße Verbindungsart gut gezeigt und im Text erläutert werden kann.

Es versteht sich, dass entlang der Profilleiste mehrere Durchtrittsöffnungen, Ausnehmungen vorgesehen sind und das verformbare und aushärtbare Material abschnittsweise oder entlang der gesamten Profilleiste vorgesehen sein kann.

Es zeigt:
- Fig. 1a und 1b: einen Gittergewebestreifen und eine Profilleiste vor und nach einer erfindungsgemäßen Verbindung;
- Fig. 2: einen Gittergewebestreifen und eine Profilleiste, die als Eckprofil ausgebildet sind und eine erfindungs- gemäße Verbindung zwischen dem Gittergewebe- streifen und der Profilleiste an beiden Schenkeln aufweisen;
- Fig. 3: einen Gittergewebestreifen und eine als Eckprofil ausgebildete Profilleiste mit einer Putzabzugskante.

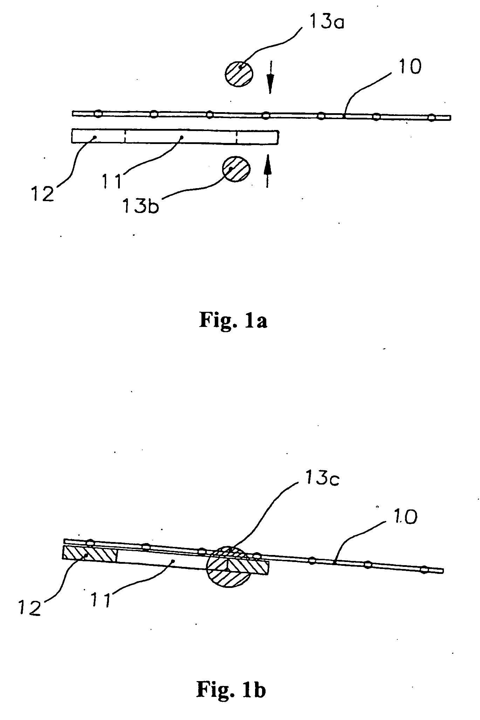

Fig. 1a zeigt mit 10 einen Gittergewebestreifen in stark schematisierter Form, wobei zwischen den am Gittergewebestreifen 10 gezeigten Punkten Gitterdurchbrüche ausgebildet sind. Mit einer Durchtrittsöffnung 11 ist eine Profilleiste 12 von dem Gittergewebestreifen 10 beabstandet dargestellt, und beidseits des Gittergewebestreifens 10 und der Profilleiste 12 ist ein formstabil aushärtbares Material 13a, 13b positioniert, das in der Fig. 1a als Rundschnur dargestellt ist. Die Rundschnüre sind in der dargestellten Ausführungsform Rundschnüre aus thermoplastischem Material und sind in der positionierten Form der Fig. 1a noch weich und somit verformbar.

In Fig. 1b ist der Gittergewebestreifen 10 mit der Profilleiste 12 erfindungsgemäß verbunden dargestellt. Die Rundschnüre 13a, 13b aus Fig. 1a wurden in Pfeilrichtungen auf das Gittergewebe des Gittergewebestreifens 10 einerseits und auf die Profilleiste 12 andererseits gepresst. Bei diesem Verpressungsvorgang ist das thermoplastische Material der Rundschnur 13b durch die Durchtrittsöffnung 11 hindurchgepresst worden, und das thermoplastische Material der Rundschnur 13a wurde durch die gitterförmigen Öffnungen des Gittergewebestreifen 10 so gepresst, dass es den Gittergewebestreifen 10 durchdringt und gleichzeitig Teile der Gitterstruktur des Gitterstreifens 10 überdeckt. Die Rundschnüre 13a und 13b haben sich bei dem Verpressungsvorgang materialschlüssig verbunden und umgreifen die Durchtrittsöffnung 11 an einer Seite und gleichzeitig Materialabschnitte der Profilleiste 12 und des Gittergewebestreifens 10. Das Material 13c ist ausgehärtet und hält den Gittergewebestreifen 10 und die Profilleiste 12 dauerhaft zusammen. Die Profilleiste 12 kann in beliebigen Ausgestaltungsformen mit dem Gittergewebestreifen 10 verbunden werden, solange die Profilleiste 12 entsprechende Durchtrittsöffnungen 11 aufweist, die mit Öffnungen im Gittergewebestreifen 10 kommunizieren können.

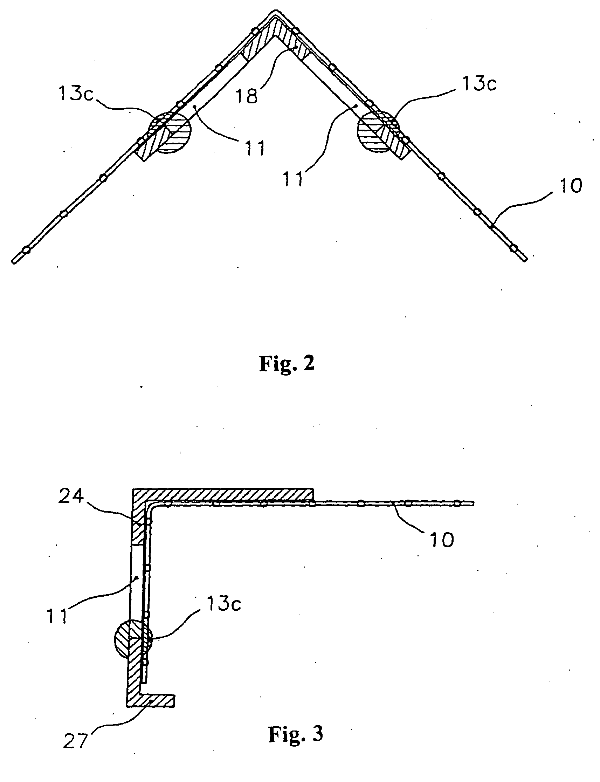

Fig. 2 zeigt einen Gittergewebestreifen 10, wie er an einer als Eckprofil ausgebildeten Profilleiste 18 anliegt. Die Durchtrittsöffnungen 11 nehmen jeweils an beiden Schenkeln des Eckprofils das formstabil ausgehärtete Material auf, das den Gittergewebestreifen 10 mit der Profilleiste 18 form- und kraftschlüssig verbindet.

In der Fig. 3 ist eine weitere Ausführungsform von einem Gittergewebestreifen 10 und einer Profilleiste 24 gezeigt, die als Eckprofil ausgebildet ist. In der Fig. 3 ist an der Profilleiste 24 eine Putzabzugskante 27 vorgesehen. Das ausgehärtete Material, das ein Thermoplast, Duroplast oder ein Elastomer 13c sein kann, durchdringt dabei Gitteröffnungen im Gittergewebestreifen 10 und durchdringt die Durchtrittsöffnung 11 derart, dass eine kraftschlüssige und formschlüssige Verbindung zwischen dem Gittergewebestreifen 10 und der Profilleiste 24 dauerhaft gegeben ist.

## Patentansprüche

1. Gittergewebestreifen (10) mit einer Profilleiste (12; 18; 24), wobei die Profilleiste (12; 18; 24) mindestens eine Durchtrittsöffnung (11) aufweist, wobei die Profilleiste (12; 18; 24) auf einer Seite des Gittergewebestreifens (10) angeordnet ist, wobei die Profilleiste (12; 18; 24) über ein verformbares und formstabil aushärtbares Material (13a, 13b, 13c) an dem Gittergewebestreifen (10) gehalten ist, in dem das formstabil Material (13a, 13b, 13c) die Durchtrittsöffnung (11) teilweise ausfüllt und abdeckt und das formstabil aushärtbare Material (13a, 13b, 13c) den Gittergewebestreifen (10) durchdringt und auf der anderen Seite des Gittergewebestreifens (10) auf der freien Oberfläche des Gittergewebestreifens (10) eine Fläche abdeckt, die sich zur Durchtrittsöffnung (11) versetzt auf dem Gittergewebestreifen (10) erstreckt, derart, dass das aushärtbare Material (13a, 13b, 13c) die Durchtrittsöffnung (11) an einer Seite und gleichzeitig Materialabschnitte der Profilleiste (12) und des Gittergewebestreifens (10) umgreift.

2. Gittergewebestreifen nach Anspruch 1, **dadurch gekennzeichnet, dass** der Gittergewebestreifen (10) aus Kunststoff, Glasfaser, Glasseidengewebe oder anderen Materialien hergestellt ist und die Profilleiste (12; 18; 24) ein Kunststoff- oder Metallprofil ist.

3. Gewebestreifen nach Anspruch 1 oder 2, **dadurch gekennzeichnet, dass** die Profilleiste (18; 24) als Eckprofil ausgebildet ist und jeder Schenkel des Eckprofils am Gittergewebestreifen (10) gehalten ist.

4. Gittergewebestreifen nach einem der Ansprüche 1 bis 3, **dadurch gekennzeichnet, dass** die Profilleiste (24) als Putzabzugskante (27) und/oder als Tropfkante ausgebildet ist.

5. Gittergewebestreifen nach einem der Ansprüche 1 bis 4, **dadurch gekennzeichnet, dass** die Profilleiste (12; 18; 24) mit einer Durchtrittsöffnung (11) und einem Gittergewebestreifen (10) beidseits von als Rundschnüre ausgebildetem verformbaren und aushärtbaren Material (13c) überlappend durchdrungen ist.

6. Gittergewebestreifen nach Anspruch 5, **dadurch gekennzeichnet, dass** die Rundschnüre abschnittsweise und/oder miteinander verschweißt am Gittergewebestreifen (10) und an der Profilleiste (12; 18; 24) anliegen.

7. Gittergewebestreifen nach einem der Ansprüche 1 bis 6, **dadurch gekennzeichnet, dass** das verformbare und aushärtbare Material (13a, 13b, 13c) ein Thermoplast, Duroplast oder ein Elastomer ist.

## Claims

1. Mesh fabric strip (10) with a profiled strip (12; 18; 24), in which case the profiled strip (12; 18; 24) has at least one through opening (11), said profiled strip (12; 18; 24) being disposed on one side of the mesh fabric strip (10), and the profiled strip (12; 18; 24) being held fast to the mesh fabric strip (10) by a deformable material (13a, 13b, 13c) which can be hardened so as to be dimensionally stable, the dimensionally stable, hardened material (13a, 13b, 13c) partly filling and covering the through opening (11), and the material (13a, 13b, 13c), hardenable so as to be dimensionally stable, passing through the mesh fabric strip (10) and on the other side of the mesh fabric strip (10) on the free surface of said mesh fabric strip (10) covering an area which extends over the mesh fabric strip (10) so as to be offset relative to the through opening (11) in such a way that the hardenable material (13a, 13b, 13c) surrounds the through opening (11) at one side and simultaneously surrounds parts of the material of the profiled strip (12) and mesh fabric strip (10).

2. Mesh fabric strip according to Claim 1, **characterized in that** the mesh fabric strip (10) is made of plastic, glass fibre, fibre glass fabric or other materials and the profiled strip (12; 18; 24) is a plastic or metal profile.

3. Mesh fabric strip according to Claim 1 or 2, **characterized in that** the profiled strip (18; 24) takes the form of a corner profile and each leg of the corner profile is fixed to the mesh fabric strip (10).

4. Mesh fabric strip according to one of Claims 1 to 3, **characterized in that** the profiled strip (24) takes the form of a plaster strike-off edge (27) and/or a drip edge.

5. Mesh fabric strip according to one of Claims 1 to 4, **characterized in that** the profiled strip (12; 18; 24) with through opening (11) and mesh fabric strip (10) is penetrated from both sides by deformable and hardenable material (13c), taking the form of round cords, in such a way as to overlap.

6. Mesh fabric strip according to Claim 5, **characterized in that** the round cords are provided in some sections and/or are welded together along the mesh fabric strip (10) and profiled strip (12; 18; 24).

7. Mesh fabric strip according to one of Claims 1 to 6, **characterized in that** the deformable and hardenable material (13a, 13b, 13c) is a thermoplastic, duroplastic or an elastomer.

## Revendications

1. Bande de tissu à mailles (10) avec une baguette profilée (12 ; 18 ; 24), dans laquelle la baguette profilée (12 ; 18 ; 24) présente au moins une ouverture de passage (11), dans laquelle la baguette profilée (12 ; 18 ; 24) est agencée sur un côté de la bande de tissu à mailles (10), dans laquelle la baguette profilée (12 ; 18 ; 24) est retenue via un matériau (13a, 13b, 13c) déformable et durcissable en forme stable sur la bande de tissu à mailles (10), dans laquelle le matériau (13a, 13b, 13c) durcissable en forme stable remplit et recouvre en partie l'ouverture de passage (11) et le matériau (13a, 13b, 13c) durcissable en forme stable traverse la bande de tissu à mailles (10) et recouvre sur l'autre côté de la bande de tissu à mailles (10) sur la surface libre de la bande de tissu à mailles (10) une surface qui s'étend en décalage par rapport à l'ouverture de passage (11) sur la bande de tissu à mailles (10) de sorte que le matériau durcissable (13a, 13b, 13c) enveloppe l'ouverture de passage (11) sur un côté et en même temps des sections de matériau de la baguette profilée (12) et de la bande de tissu à mailles (10).

2. Bande de tissu à mailles selon la revendication 1, **caractérisée en ce que** la bande de tissu à mailles (10) est fabriquée à partir d'un matériau synthétique, de fibres de verre, d' un tissu de soie de verre ou d'autres matériaux et **en ce que** la baguette profilée (12 ; 18 ; 24) est un profilé de matériau synthétique ou de métal.

3. Bande de tissu selon la revendication 1 ou 2, **caractérisée en ce que** la baguette profilée (18 ; 24) se présente sous la forme d'un profilé d' angle et chaque branche du profilé d'angle est retenue sur la bande de tissu à mailles (10).

4. Bande de tissu à mailles selon l'une quelconque des revendications 1 à 3, **caractérisée en ce que** la baguette profilée (24) se présente sous la forme d'une arête de retrait de crépi (27) et/ou sous la forme d'une arête de rejet d'eau.

5. Bande de tissu à mailles selon l'une quelconque des revendications 1 à 4, **caractérisée en ce que** la baguette profilée (12 ; 18 ; 24) avec une ouverture de passage (11) et une bande de tissu à mailles (10) est pénétrée de part et d'autre par chevauchement par le matériau (13c)déformable et durcissable se présentant sous la forme de ganses.

6. Bande de tissu à mailles selon la revendication 5, **caractérisée en ce que** les ganses s'appliquent par soudage par segments et/ou l'un avec l'autre sur la bande de tissu à mailles (10) et sur la baguette profilée (12 ; 18 ; 24).

7. Bande de tissu à mailles selon l'une quelconque des revendications 1 à 6, **caractérisée en ce que** le matériau déformable et durcissable (13a, 13b, 13c) est un matériau thermoplastique, un matériau thermodurcissable ou un élastomère.
